# EUROPEAN PATENT SPECIFICATION

(11) **EP 0 368 671 B1**
(45) Date of publication and mention of the grant of the patent: **15.05.1996**
(21) Application number: 89311648.3
(22) Date of filing: 10.11.1989
(51) Int. Cl.: G06K 9/48

(54) **Feature extracting apparatus**
Merkmalermittlungsgerät
Appareil d'extraction de caractéristiques

(30) Priority: 11.11.1988 JP 283874/89
(43) Date of publication of application: 16.05.1990
(73) Proprietor: CANON KABUSHIKI KAISHA, Tokyo 146 (JP)
(72) Inventor: Ogawa, Masami, Tokyo (JP)
(74) Representative: Beresford, Keith Denis Lewis

(56) References cited:
- EP-A- 0 190 727
- DE-A- 2 116 414
- COMPUTER VISION, GRAPHICS & IMAGE PROCESSNG, vol. 27, no. 1, July 1984, pages 115-123, New York, US; F.A. GERRITSEN et al.: "Implementation of cellular-logic operator using 3 * 3 convolution and table lookup hardware

## Description

### BACKGROUND OF THE INVENTION

### 1. Field of the Invention

The present invention relates generally to feature extracting circuits and, more particularly, to a feature extracting circuit arranged to effect feature extraction of an image by extracting direction indexes of the outline of a binary digital image. This invention also relates to apparatus including scanner input and an extracting circuit, look-up tables for use in extracting circuits, a method of loading a look-up table, and a method of feature extraction.

### 2. Description of the Related Art

Image recognition apparatus of the type which are used for character recognition, pattern recognition or the like are commonly arranged to perform the process of calculating the "feature amount" of an image. In one known method of calculating such feature amount, the direction of an outline which defines a particular black-pixel component (or area) is detected as the feature amount. An optical character reader (OCR) of the conventional type which employs the known method will be described below.

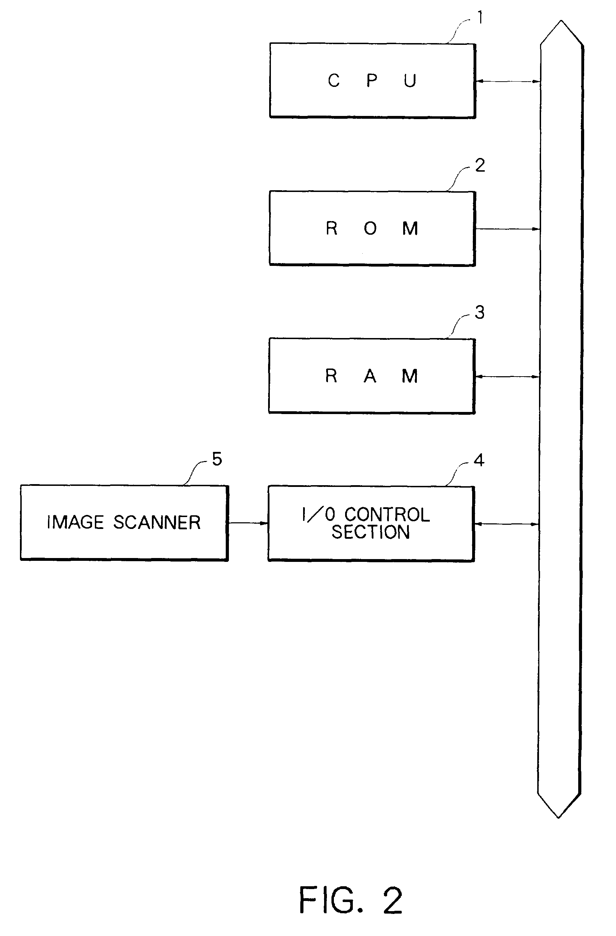

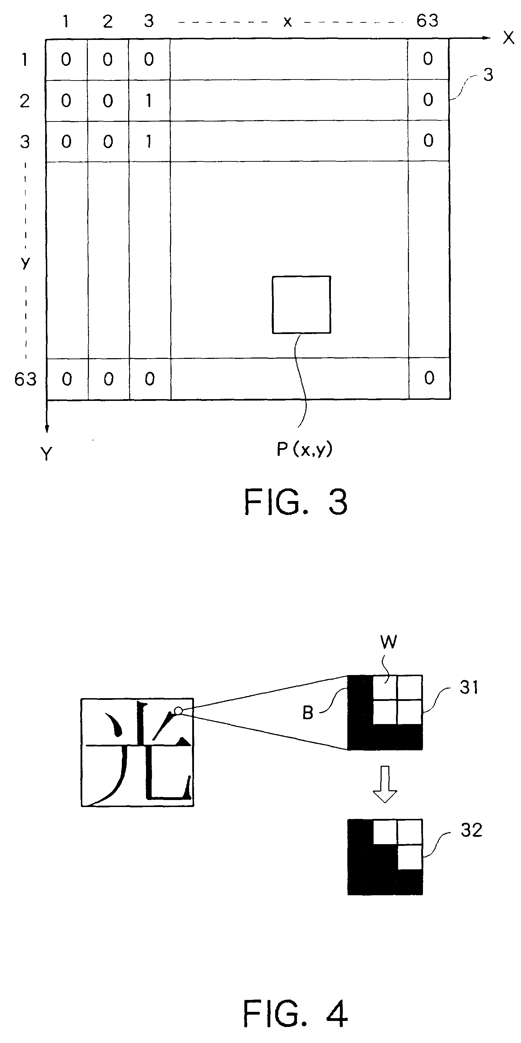

For example, in the OCR shown in Fig. 2, a document to be recognised is inputted through an image scanner 5 and the resulting digitised image is stored in a RAM 3 by means of an I/O control section 4. Then, a CPU 1 calculates the feature amount of the image stored in the RAM 3 in accordance with the programs stored in a ROM 2. The image stored in the RAM 3 assumes the two-dimensional matrix as shown in Fig. 3. In the matrix of the input image, the X coordinate axis extends from the uppermost left position (as viewed in Fig. 3) to the right in the horizontal direction, while the Y coordinate axis extends from the same position to the bottom in the vertical direction. If the colour of a particular read pixel is black, the value "1" is placed at the corresponding pixel position in the matrix, while if the colour is white, the value "0" is place at the corresponding pixel position.

After the image has been stored in the RAM 3, the CPU 1 effects a filtering process. The filtering process means a process for removing noise from an image input by the image scanner 5, a process for correcting, as shown in Fig. 4, a portion 31 which includes the part of an outline which was originally smooth but was notched during digitization employing the image scanner 5, thereby providing a portion 32 which includes the part thus corrected, or other similar processes.

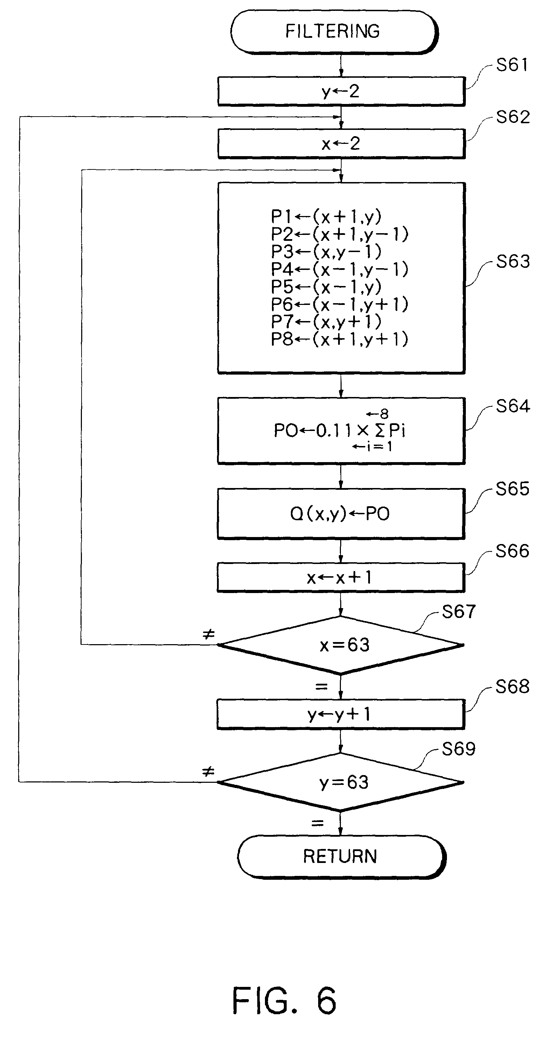

The algorithm of this filtering process is explained with reference to Fig. 6. In the following explanation, it is assumed that an input image has a width of 63 pixels and a height of 63 pixels and that P (x, y) represents the value of a pixel positioned at coordinates (x, y).

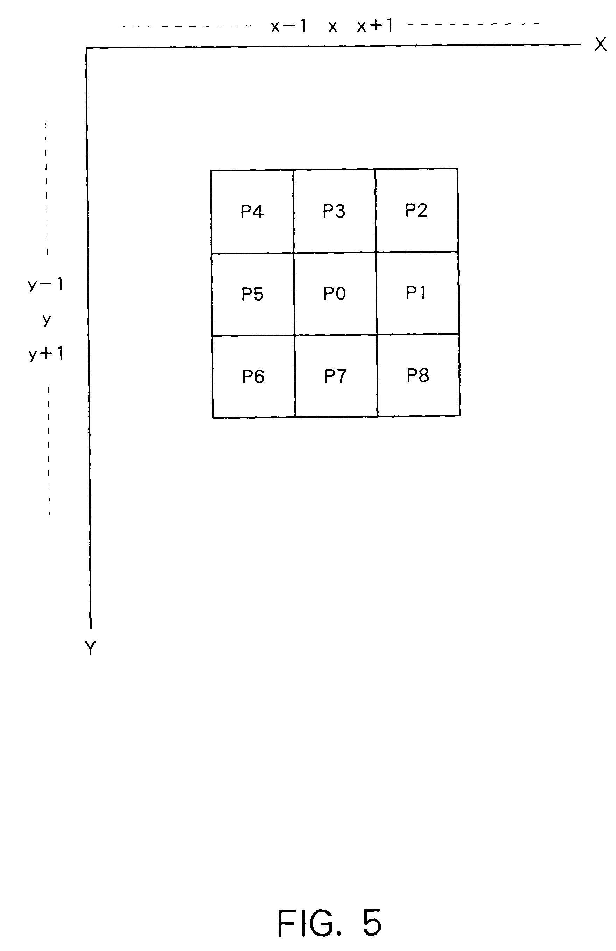

The following process is repeated for each value of y (y = 2, 3, ..., and 62). For x = 2 the value of the pixel positioned at coordinates (2, 2) is calculated from the values of eight neighboring pixels by using the following equation. 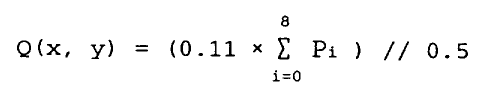 where Pᵢ (P₀, P₁, ..., P₈) represents each point shown in Fig. 5; P₀ = P(x, y); P₁ = P(x + 1, y); P₂ = P(x + 1, y - 1); P₃ = P(x, y - 1); P₄ = P(x - 1, y - 1); P₅ = P(x - 1, y); P₆ = P(x - 1, y + 1); P₇ = P(x, y + 1); and P₈ = P(x + 1, y + 1). "//" represents that the figures below the decimal place are omitted from the quotient. More specifically, of a total of nine pixels, i.e., one particular pixel P(x, y) and eight pixels which neighbor on this pixel, if at least five pixels are black, the pixels assume the same array as that corresponding to Q(x, y).

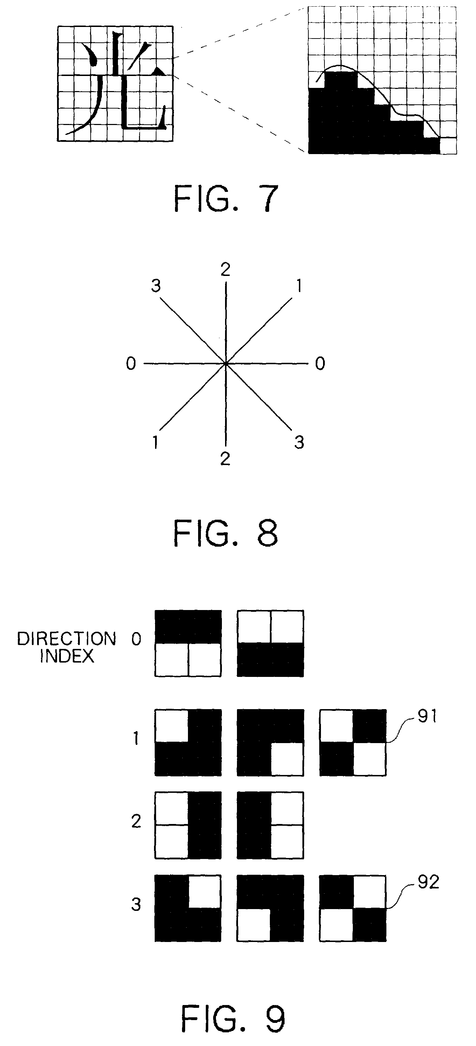

Once the filtering process is completed, then a direction index is calculated. The direction index is a value which, as shown in Fig. 8, indicates the direction of the boundary between adjacent black and white pixels. As shown by the patterns of Fig. 9, the direction index "0" indicates that the boundary runs in the horizontal index "1" indicates that the boundary is located on the upper right side or the lower left side, the direction index "2" indicates that the boundary runs in the vertical direction, and the direction index "3" indicates that the boundary is located on the lower right side or the upper left side. In other words, the direction index of the pixel P(x, y) is calculated from a total of four pixels, i.e., the three neighboring pixels P(x + 1, y), P(x, y + 1) and p(x + 1, y + 1) as well as the pixel P(x, y) of interest.

The feature amount of a character of interest is determined in accordance with how many outline portions indicated by the individual direction indexes "0", "1", "2" and "3" are contained in the character. For example, since the patterns 91 and 92 shown in Fig. 9 each include two outlines, the number of outlines counted needs to be two. For this purpose, added data is obtained which determines whether the number of outlines counted is one or two. Of the patterns shown in Fig. 9, the patterns 91 and 92 each correspond to added data "2", while the other patterns correspond to added data "1". If there is no pattern similar to any of the patterns of Fig. 9, it indicates that no outline is present, and the corresponding added data is set to "0".

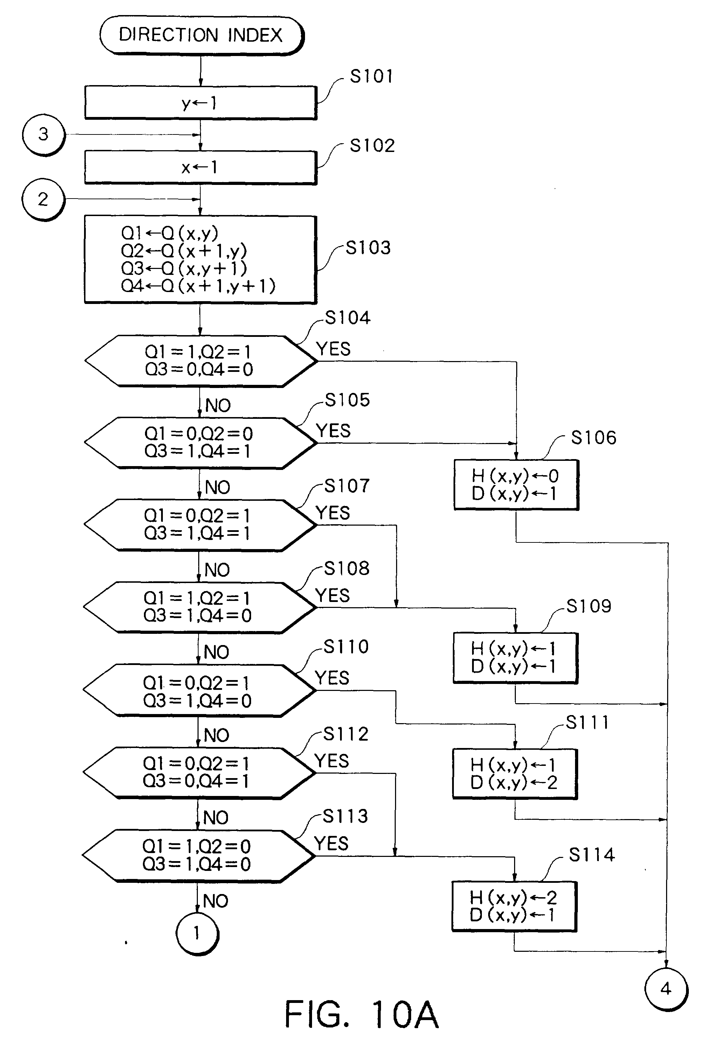

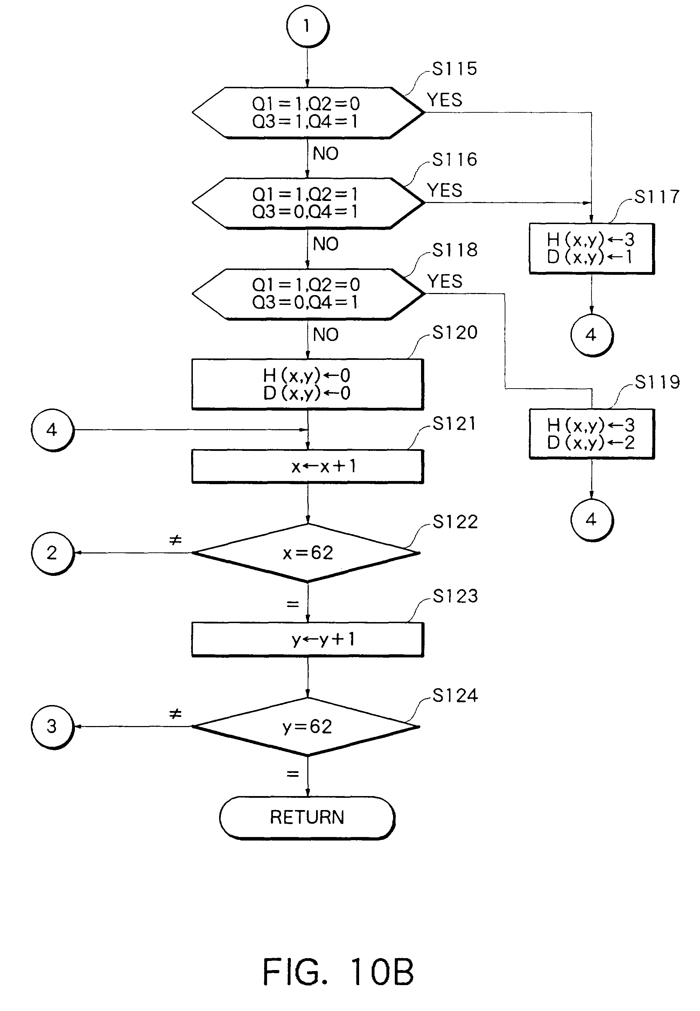

An algorithm for calculating such a direction index is explained with reference to the flow charts of Figs. 10A and 10B. In Step S101, the vertical coordinate y is initialized with "1", and in Step S102 the horizontal coordinate x is initialized with "1". Then, in Step S103, the values Q (1, 1), Q(2, 1), Q(1, 2) and Q(2, 2) of individual coordinates (1, 1), (2, 1), (1, 2) and (2, 2) are read from image data Q to which a filtering process has been applied, and these values Q (1, 1), Q(2, 1), Q(1, 2) and Q(2, 2) are set as Q₁, Q₂, Q₃ and Q₄, respectively.

If Q₁ = 1, Q₂ = 1, Q₃ = 0 and Q₄ = 0, the process proceeds from Step S104 to Step S106, where a direction index H (1, 1) is set to 0 with added data D(1, 1) set to 1.

If Q₁ = 0, Q₂ = 0, Q₃ = 1 and Q₄ = 1, the process proceeds from Step S105 to Step S106, where a direction index H (1, 1) is set to 0 with added data D(1, 1) set to 1.

If Q₁ = 0, Q₂ = 1, Q₃ = 1 and Q₄ = 1, the process proceeds from Step S107 to Step S109, where the direction index H (1, 1) is set to 1 with the added data D(1, 1) set to 1.

If Q₁ = 1, Q₂ = 1, Q₃ = 1 and Q₄ = 1, the process proceeds from Step S108 to Step S109, where the direction index H (1, 1) is set to 1 with the added data D(1, 1) set to 1.

If Q₁ = 1, Q₂ = 1, Q₃ = 1 and Q₄ = 0, the process proceeds from Step S110 to Step S111, where the direction index H (1, 1) is set to 1 with the added data D(1, 1) set to 2.

If Q₁ = 0, Q₂ = 1, Q₃ = 0 and Q₄ = 1, the process proceeds from Step S112 to Step S114, where the direction index H (1, 1) is set to 2 with the added data D(1, 1) set to 1.

If Q₁ = 1, Q₂ = 0, Q₃ = 1 and Q₄ = 0, the process proceeds from Step S113 to Step S114, where the direction index H (1, 1) is set to 2 with the added data D(1, 1) set to 1.

If Q₁ = 1, Q₂ = 0, Q₃ = 1 and Q₄ = 1, the process proceeds from Step S115 to Step S117, where the direction index H (1, 1) is set to 3 with the added data D(1, 1) set to 1.

If Q₁ = 1, Q₂ = 1, Q₃ = 0 and Q₄ = 1, the process proceeds from Step S116 to Step S117, where the direction index H (1, 1) is set to 3 with the added data D(1, 1) set to 1.

If Q₁ = 1, Q₂ = 0, Q₃ = 1 and Q₄ = 1, the process proceeds from Step S118 to Step S119, where the direction index H (1, 1) is set to 3 with the added data D(1, 1) set to 2.

If none of the above conditions is satisfied, it indicates that no outline is detected. Accordingly, the process proceeds to Step S120, where the added data D (1, 1) is set to "0".

Then, in Step S121, the value of the horizontal coordinate x is counted up by one and the process returns from Step S121 to Step S103, where the above-described process is performed. This process is repeated until the value of the horizontal coordinate x reaches 62. When 62 is reached, the process proceeds to Step S123, where the value of the vertical coordinate y is counted up by one. Until the value of the vertical coordinate y reaches 62, the process sequentially returns from Step S124 to Step S102, and similar processes are performed with respect to the vertical coordinate y (= 2, 3, ..., 62).

When all the processes have been completed, 62 × 62 direction indexes which consist of H(1, 1), H(2, 1), ..., H(62, 1), and H(1, 2), ..., H(62, 62) as well as 62 × 62 pieces of added data which consist of D(1, 1), D(2, 1), ..., D(62, 1), and D(1, 2), ..., D(62, 62) are obtained.

In the conventional method described above, however, the program requires several hundred process steps. Accordingly, the calculation time per pixel reaches several hundred µsec. of thereabouts and it is therefore impossible to realize the speeds at which recognition processing is effected in practice.

Use of a 2x2 pixel matrix for extracting direction index data, and use of shift registers therefor is described, for example in DE-052116414.

### SUMMARY OF THE INVENTION

The present invention is intended as a solution to the problems described above. In particular it is aimed at improving the speed of feature extraction and simplifying circuit and apparatus construction.
A feature extracting circuit in accordance with the present invention is defined in claim 1 of the claims appended. A look-up table for use in this circuit is defined in claim 9. Methods for encoding the look-up table and for feature extraction are defined in claims 12 and 14, respectively.
With regard to the circuit above it is a considerable advantage that the direction indices can be determined directly from image data and that the need for preliminary smoothing correction is obviated. This contributes to an improvement in processing speed.

It is acknowledged that the use of look-up tables in general, and on application to image processing such as for contour extraction (i.e. direction indexing) or local majority voting (e.g. for smoothing correction), are known. Thus in an article appearing in Computer Vision, Graphics and Image Processing, Vol.27, pages 115 to 123) (1984) entitled "Implementation of Cellular Logic Operators Using 3x3 Convolution and Table Lookup Hardware", there is described a combination of three shift registers and a 9-bit address look-up table. 1-Bit binary contour data and 3-bit Freeman chain code contour data are stored at each address location of the look-up table. To emulate neighbourhoods larger than 3x3, multiple stages of look-up tables have been pipelined.

Other aspects of the invention which include apparatus including a circuit for feature extraction, a look-up table for direction indexing, a method of loading a look-up table, and a method of feature extraction are set out in the appended claims.

### BRIEF DESCRIPTION OF THE DRAWINGS

Fig. 1 is a block diagram showing an image processing apparatus to which one embodiment of a feature extracting circuit according to the present invention is applied;
Fig. 2 is a block diagram showing a conventional type of image processing apparatus;
Fig. 3 is a view showing the logic structure of the image data stored in a RAM;
Fig. 4 is a view which serves to illustrate the contents of a filtering process;
Fig. 5 is a view which serves to illustrate the positional relationship between a pixel p(x, y) and eight pixels which neighbor on the pixel p(x, y);
Fig. 6 is a flow chart showing the algorithm of a conventional filtering process;
Fig. 7 is a view showing an outline portion which defines a black-pixel area of a character image;
Fig. 8 is a view showing the directions indicated by direction index "0", "1", "2" and "3";
Fig. 9 is a view showing typical 2 × 2 pixel patterns from which the direction indexes are obtained;
Fig. 10A and 10B are flow charts showing a conventional algorithm used for calculating direction indexes;
Fig. 11 is a flow chart showing an algorithm used for writing data to a blank ROM to make a decoding ROM;
Fig. 12A is a view showing a 4 × 4 pixel block;
Fig. 12B is a view showing a display example of a 4 × 4 pixel block;
Fig. 13 is a view which serves to illustrate the operation of each counter with respect to direction indexes H and added data D;
Fig. 14 is a flow chart showing the sequence in which steps are executed in the embodiment; and
Fig. 15 is a block diagram showing another embodiment of a feature extracting circuit which employs a dual port memory in place of the decoding ROM.

### DESCRIPTION OF THE PREFERRED EMBODIMENTS

Embodiments of the present invention will be explained in detail below with reference to the accompanying drawings. The description that follows is given by way of example only.

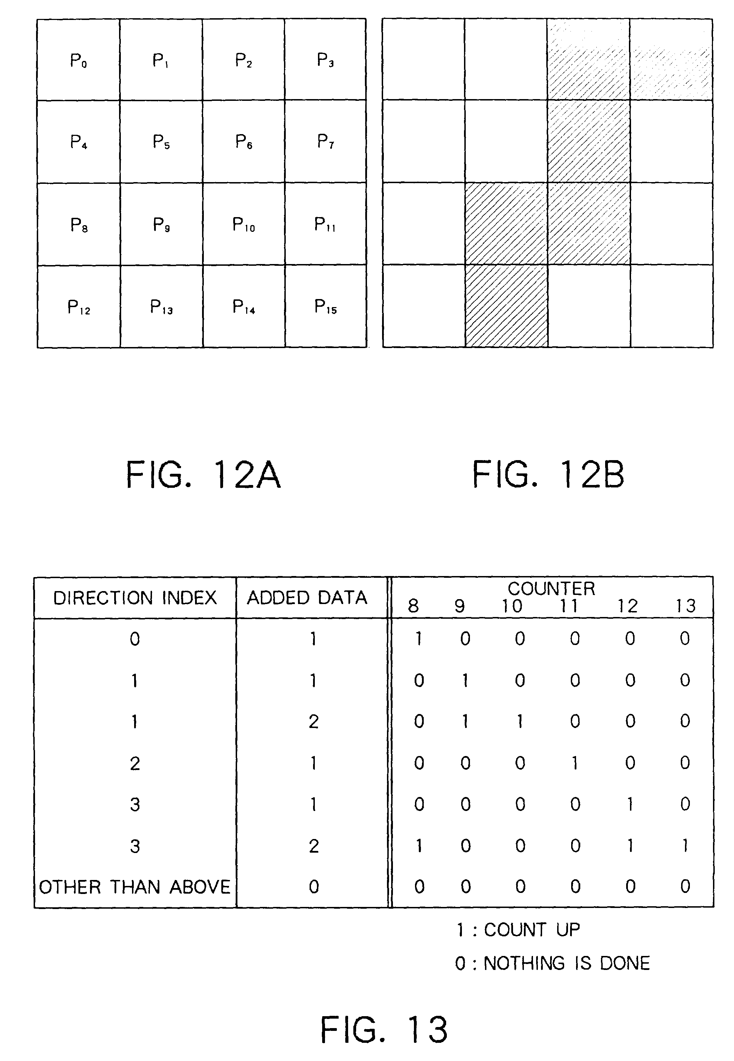

In the embodiments to be described below a decoder, in particular a read only memory ROM, random access memory RAM or logic gate array is incorporated for transforming partial image data to provide direction index and added data indication. The address for this decoder is provided from partial image data and is a binary coding for the pattern of the partial image represented. The partial image represented includes not only the relevant pixel for which the direction index and added data is generated, and also the three adjoining pixels which form with the relevant pixel a 2 x 2 array, but also the nearest neighbour pixels adjacent to the 2 x 2 array. A partial image is illustrated in Figure 12A and comprises a 4 x 4 array of 16 pixels P0 to P15. It will be noted the partial image data obtained for this 4 x 4 array of pixels and used to provide the decoder address is raw data ie data that has not been subjected to smoothing correction filtering. Consider now the provision of direction index and added data for pixel P5. It will be recalled that in the prior art smoothing correction is applied first before extraction of direction index and added data indication. In accordance with the conventional algorithm shown in Figure 6 the corrected value for pixel P5 is obtained by an average determined from pixel P5 and its nearest neighbours, ie the 3 x 3 pixel array P0, P1, P2, P4, P5, P6, P8, P9 and P10. Similarly the adjoining 2 x 2 array pixel elements P6, P10 and P9 are corrected by averaging over nearest neighbours ie the 3 x 3 pixel arrays P1, P2, P3, P5, P6, P7, P9, P10 and P11; P5, P6, P7, P9, P10, P11, P13, P14 and P15; and, P4, P5, P6, P8, P9, P10, P12, P13 and P14. It will thus be appreciated that all the data that is required for providing direction index and added data indication for pixel P5 is derived from the full 4 x 4 16 pixel array P0 to P15. In the embodiments to be described the image data for this partial image array, the 4 x 4 array P0 to P15 is used directly, it is used to assemble an address, and the direction index and added data are derived without recourse to initial processing smoothing correction. All steps of the filtering algorithm shown in Figure 6, therefore, are obviated. The black and white pattern of the 4 x 4 array P0 to P15 is coded as a 16-bit binary address. By way of illustration a typical black and white 4 x 4 pixel array pattern is shown in Figure 12B. Readily this pattern can be represented by a 16-bit binary address, the address 3264H in hexadecimal notation. Also it is convenient to provide direction index and added data indication using a 6-bit code. A particularly convenient coding is shown in Figure 13. Thus for example 4 x 4 pixel array pattern for which the direction index H = 1 and the added data D = 2 can be represented by the binary code "011000". The requisite transformation of partial image data to direction index and added data indication can thus be performed using a decoder having a 16-bit address input and a 6- bit output. Mention is here made of large capacity ROMs such as 27512, 271024 or the like (manufactured by Fujitsu Limited) which may be employed for this purpose.

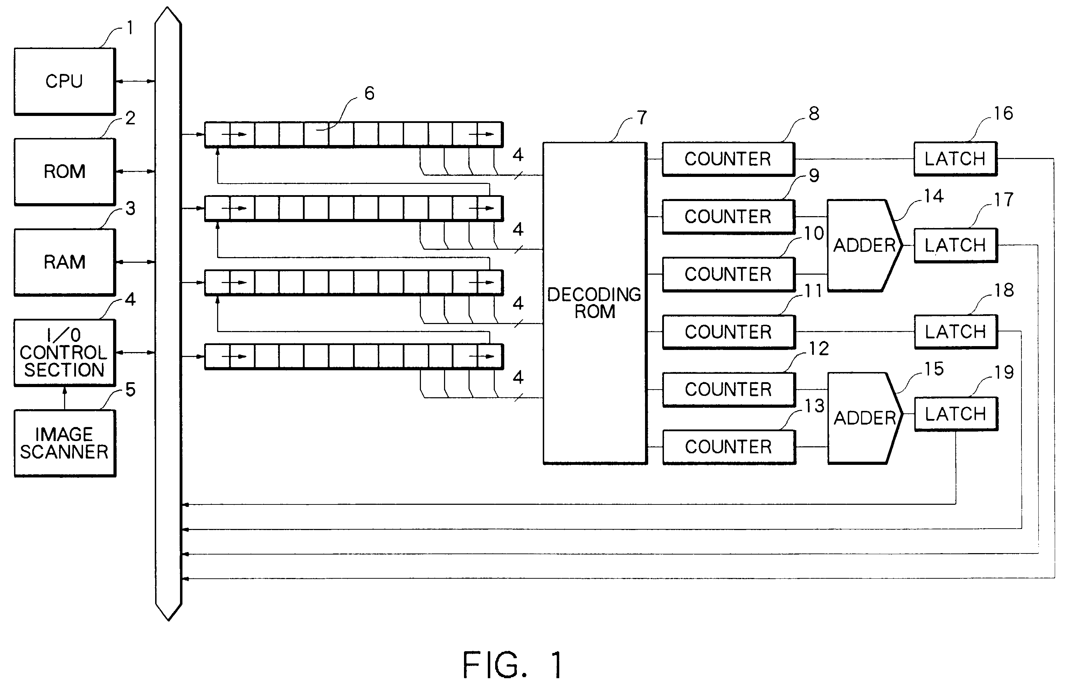

Fig. 1 is a block diagram showing an optical character reader ("OCR") in which one embodiment of a feature extracting circuit according to the present invention is applied. The illustrated OCR includes: a CPU 1 for controlling all the elements of the OCR; a ROM 2 which stores a set of programs to be executed by the CPU 1; a RAM 3 which stores a set of input data representing characters, patterns or other images and a set of feature data associated therewith; an I/O control section 4 to which is connected an image scanner 5 for use in inputting image information such as a document, a photograph or the like; a set of four shift registers 6 which are arranged in series to store raw image digitised data, a decoding ROM 7 for outputting counter enable signals corresponding to direction index and added data determined for each pixel; counters 8-13 for counting the outputs from the decoding ROM 7; an adder 14 for adding the values of the counters 9 and 10; an adder 15 for adding the values of the counters 12 and 13; latches 16 and 18 for holding the outputs from the respective counters 8 and 11; and latches 17 and 19 for holding the outputs from the respective adders 14 and 15. Each of the shift registers 6 has at its end four parallel output terminals. These are connected in parallel to respective ones of the 16 bit inputs of the decoding ROM 7 to applying consecutive 16-bit addresses thereto. The shift registers 6 are arranged in series head-to-tail so that data can be progressed therethrough bit-by-bit on each clocking cycle.

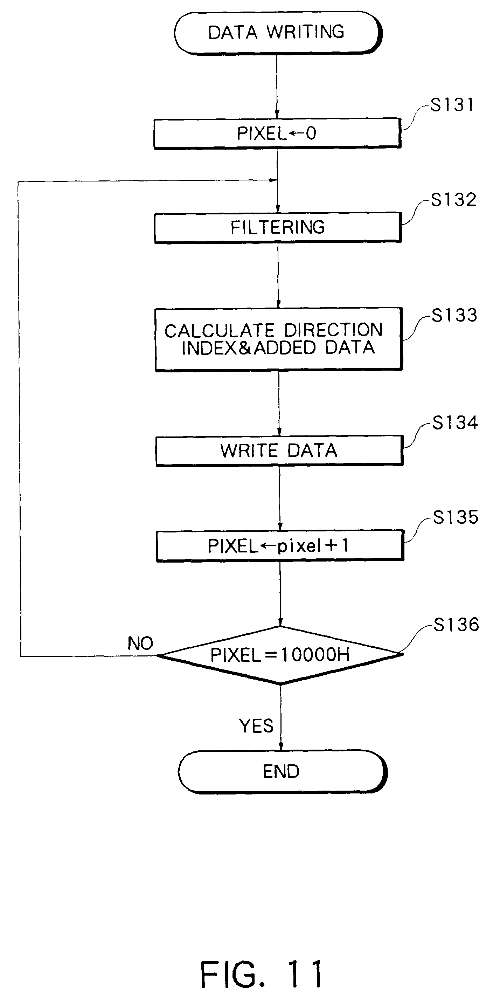

The programming of the decoding ROM 7 will now be described. Initially program image pattern data is loaded into the random access memory 3. This then is downloaded bit-by-bit until the four shift registers 6 are filled. The four end stores of each of the four registers 6 will now contain data for a partial image comprising pixels P0 to P15 as shown in Figure 12A. The data writing algorithm shown in Figure 11 is then executed. Initially a pixel counter is set to zero in step S131 of this procedure. Data corresponding the partial image P0 to P15 is then filtered at step S132. This provides corrective data for pixels P5, P6, P9 and P10. This filtering may be performed conventionally as described above with reference to Figure 6 for pixel data corresponding to each of the pixels P5, P6, P9 and P10. After the smoothing correction at step S132 the direction index and added data is calculated for pixel P5 from the corrected values of data for pixels P5, P6, P9 and P10 derived as above at step S133. This also may be performed conventionally and the algorithm illustrated in Figures 10A and 10B executed. The direction index and added data derived in this step is then provided in a 6-bit coded form as in Figure 13. The signal is then applied to the write enable input of the decoding ROM 7 and this 6- bit data written into the appropriate memory location accessed by the 16-bit address applied at input-step 134. At the next step of the algorithm, S135, the pixel counter is incremented, the next image data bit is loaded into the shift registers 6 and the contents of these registers incremented one stage to define the next consecutive 16 bit address, and the steps of filtering S132, calculation S133, writing S134, and incrementation S135, repeated. This procedure is then performed repeatedly until all 16-bit addresses 0000H to FFFFH have been applied and the appropriate ROM data written into the blank ROM 7. This is indicated at step S136 and the procedure terminated.

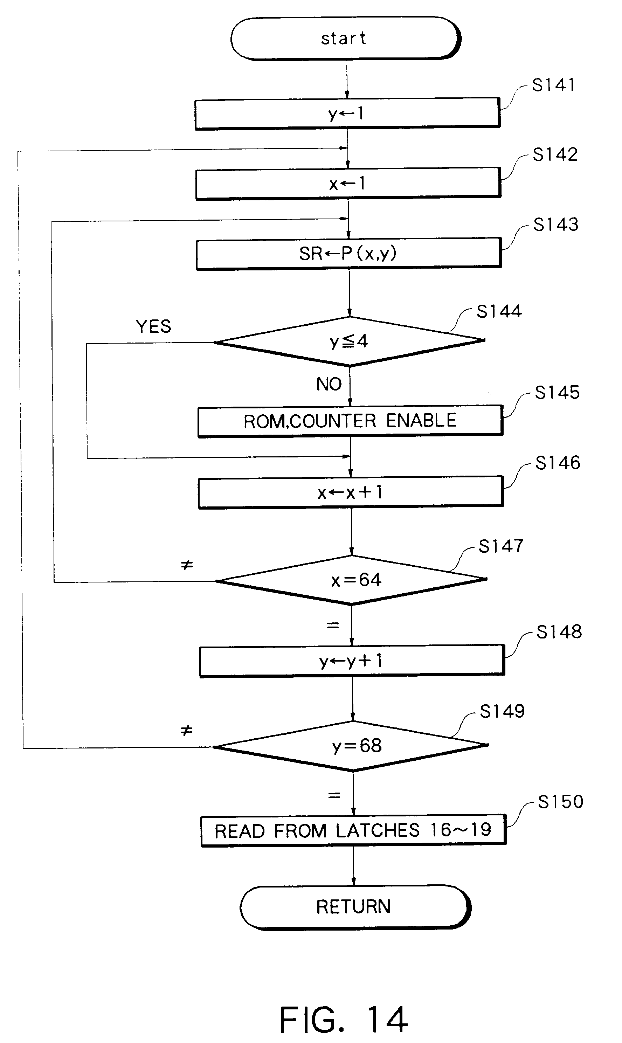

The operation of the above embodiment of a feature extracting circuit according to the present is explained with reference to the block diagram of Fig. 1, which shows this embodiment, and the flow chart of Fig. 14.

First of all, in Step S141, the value of the y coordinate is initialized with "1" and then in Step S142, the value of the x coordinate is initialized with "1". In Step S143, the value P(x, y) of a pixel located at coordinates (x, y) is read from the RAM 3, and is then written to the shift registers 6. Since no pixel data corresponding to the first four lines (y = 1, 2, 3 and 4) is prepared in the shift registers 6, the process jumps from Step S144 to Step S146, where the value of the x coordinate is incremented by one. The operation of writing pixel data to the shift registers 6 is repeated until the value of the x coordinate reaches "64".

If the value of the y coordinate reaches "5" (y ≧ 5), after writing to the shift registers 6 has been completed in Step S143, the process proceeds to Step S145, where a ROM enable signal is set to enable mode. When the ROM enable signal is set to its enable mode, the output of the ROM 7 changes from its high-impedance state to a value which have previously been written in, whereby the counters 8-13 are actuated in accordance with the direction index H and the added data D.

The outputs of the counters 8 and 11 are supplied to the latches 16 and 18, respectively. The outputs of the counters 9 and 10 are added by the adder 14 and supplied to the latch 17. Likewise, the outputs of the counters 12 and 13 are added by the adder 15 and supplied to the latch 19. In this manner, the direction indexes H "0", "1", "2" and "3" are held in the respective latches 16-19.

Then, in Step S148, the value of the horizontal coordinate y is incremented by one and the process returns through Step S149 to Step S142, where the above-described process is performed. This process is repeated until the value of the horizontal coordinate y reaches 67. When 67 is exceeded, the sums of the direction indexes "0"-"3" of each of the 63 × 63 pixels of the character image are held in the latches 16 and 19, respectively. Then, the process proceeds to Step S150, where the values of the respective latches 16-19 are read out so that the feature amount of the image is obtained.

Since the process executed in Steps S143-S146 is merely writing to the shift registers 6, the number of steps to be used in the program is only three to five or thereabouts, whereby the speed of feature extraction is increased.

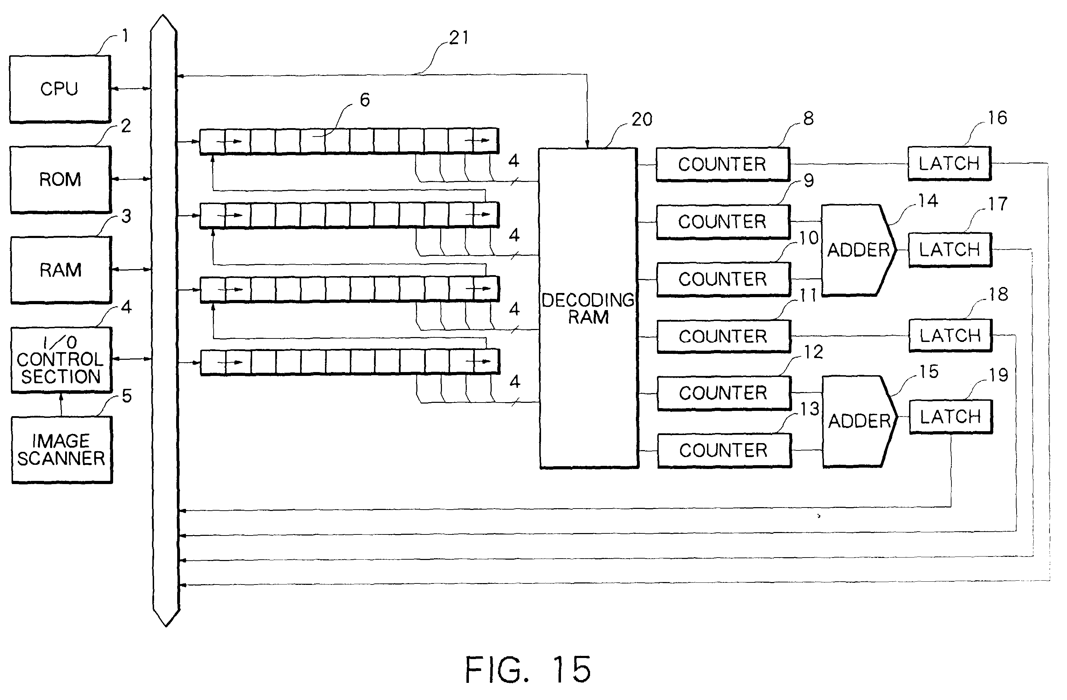

Although the above embodiment employs a decoding ROM as a look-up table, a look-up table consisting of a general logic IC may be employed. A RAM may also be employed as the look-up table and data may be written to the RAM before the operation of the circuit is started. Fig. 15 shows another embodiment employing a dual port RAM 20 which is independently provided with address and data buses.

In this embodiment, data based on another filtering algorithm can be transferred from the CPU 1 to the RAM 20 over a bus 21. Accordingly, by effecting filtering of the type which matches an image on each document, appropriate feature extraction can be performed.

As is apparent from the foregoing, with the feature extracting circuit according to either of the embodiment described above, it is possible to effect feature extraction of an image at improved speeds, whereby the processing speed of character recognition, pattern recognition or the like is increased.

## Claims

1. A feature extracting circuit (Fig. 1) comprising input means (1-5) for inputting an image including a plurality of pixels (P), address means (6) to generate a binary coded look-up table address representing a pattern of pixels in a selected area (P₀-P₁₅) of the inputted image, a look-up table (7), co-operative with said address means (6), which is responsive to each address to output a digital signal representing a direction index (H) for the selected area, and output means (8-19) for outputting a count of the direction index (H) as a feature of the inputted image, which circuit (Fig.l) is characterised in that:
said look-up table (7) stores data in accordance with each generated address, which data represents the result of first smoothing the inputted image by determining values for direction defining pixels (P₅, P₆, P₉, P₁₀) including the specified pixel (P₅) to be processed, based on the average of the pixels adjacent to each of the direction defining pixels (P₅, P₆, P₉, P₁₀) and the respective direction defining pixel and then extracting a direction index (H) based on the smoothed direction defining pixels (P₅, P₆, P₉, P₁₀).

2. A circuit (6,7) as claimed in claim 1 wherein said selected area (P₀-P₁₅) of said image consists in a 2x2 array (P₅,P₆,P₉,P₁₀), comprised of the respective pixel (P₅) and three adjacent direction defining pixels (P₆,P₉,P₁₀), and other pixels (P₀-P₄,P₇,P₈,P₁₁-P₁₅) neighbouring the array for providing complete smoothing correction information for the pixels (P₅,P₆,P₉,P₁₀) of the array.

3. A circuit as claimed in claim 2 wherein each address is of sixteen bits and said selected area (P₀-P₁₅) is a 4x4 array.

4. A circuit as claimed in claim 3 wherein said address means (6) comprises four shift registers which are connected in series and have each four parallel outputs each to output four bits of the sixteen bit address.

5. A circuit as claimed in any preceding claim wherein said look-up table (7) includes, at each address, direction index data (H) and added data (D), which added data (D) represents a count of boundaries between the respective pixel (P₅) and the direction defining pixels (P₆,P₉,P₁₀) which otherwise could be determined on the basis of the respective pixel (P₅) and the direction defining pixels (P₆,P₉,P₁₀) following smoothing correction using said other pixels (P₀-P₄,P₇,P₈,P₁₁-P₁₅).

6. A feature extracting circuit (6,7), as claimed in any preceding claim, wherein:
said address means (6) comprises a store means (6) which is arranged to store said binary digital image for a predetermined number of lines, said image consisting of a predetermined number of bits, and then to shift said image;
said look-up table (7) has respective outputs for the respective directions represented by different values of the direction indices (H); and
counters (8,9,11,13) are connected to said respective outputs.

7. A circuit (6 to 13) as claimed in claims 5 and 6 wherein:
said look-up table (7) has respective additional outputs for outputting said added data (D); and
additional counters (10,12) are connected to said respective additional outputs.

8. A feature extracting apparatus (1 to 7) comprising:-
input means (1 to 5) including an image scanner (5) for producing binary digital image data; and
a feature extracting circuit (6,7) as claimed in any preceding claim.

9. A look-up table (7), characterised in that it is arranged to operate so that, when addressed by the address means of the feature extracting circuit (6,7) of claim 1, it returns for each address representing a different pattern of pixels in a selected area (P₀ to P₁₅) of an image, a direction index (H) for a specified pixel (P₅), which direction index (H) represents the result of first smoothing the inputted image by determining values for direction defining pixels (P₅, P₆, P₉, P₁₀) including the specified pixel (P₅) to be processed, based on the average of the pixels adjacent to each of the direction defining pixels (P₅, P₆, P₉, P₁₀) and the respective direction defining pixel and then extracting a direction index (H) based on the smoothed direction defining pixels (P₅, P₆, P₉, P₁₀).

10. A look-up table (7), as claimed in claim 9, which contains both said direction index (H) and added data (D) for each said address, which added data (D) represents a count of boundaries between the respective specified pixel (P₅) and the other direction defining pixels (P₆,P₉,P₁₀) which otherwise could be determined on the basis of the respective pixel (P₅) and the other direction defining pixels (P₆,P₉,P₁₀) following smoothing correction.

11. A look-up table (7) as claimed in either of the preceding claims 9 or 10 and consisting in a read only memory.

12. A method for encoding a look-up table (7) as claimed in any preceding claims 9 to 11, which method comprises the steps of:
storing binary encoded digital image data for a selected area (P₀-P₁₅) of an image, said selected area (P₀-P₁₅) consisting of a particular specified pixel (P₅), direction defining pixels (P₆,P₉,P₁₀) adjacent to the particular pixel (P₅), and the other pixels (P₀-P_{4,}P₇,P₈,P₁₁-P₁₅) adjacent to the particular pixel (P₅) and the direction defining pixels (P₆,P₉,P₁₀) for use in defining a respective smoothing correction for the particular pixel (P₅) and for each of the direction defining pixels (P₆,P₉,P₁₀);
filtering said data, corresponding to said selected area (P₀-P₁₅), to apply a smoothing correction to the particular pixel (P₅) and the direction defining pixels (P₆,P₉,P₁₀);
determining the direction index (H) for said particular pixel (P5) of said selected area (P₀-P₁₅) of said image;
determining an address representing the pattern of the pixels (P₀-P₁₅) constituting said selected area (P₀-P₁₅);
loading data representing the direction index (H) at a location accessed by said address; and
repeating the preceding steps for each pattern possible for pixels constituting said selected area.

13. A method for encoding a look-up table as claimed in claim 12 and which method includes:
determining both said direction index (H) and added data (D) for said particular pixel (P₅), which added data (D) represents a count of boundaries between the particular pixel and the direction defining pixels (P₆,P₉,P₁₀) following said filtering; and
loading both said data representing the direction index (H) and said added data (D) at said location accessed by said address.

14. A method of feature extraction in which digital image data is used to generate an address representing a pattern of pixels in a selected area (P₀-P₁₅) of an inputted image, the method including addressing a look-up table (7), using said address, to output data representing a direction index of the selected area, and outputting count of the direction index as a feature of the image, which method is characterised in that:
said look-up table (7) stores data in accordance with each generated address, which data represents the result of first smoothing the inputted image by determining values for direction defining pixels (P₅, P₆, P₉, P₁₀) including the specified pixel (P₅) to be processed, based on the average of the pixels adjacent to each of the direction defining pixels (P₅, P₆, P₉, P₁₀) and the respective direction defining pixel and then extracting a direction index (H) based on the smoothed direction defining pixels (P₅, P₆, P₉, P₁₀).

## Patentansprüche

1. Merkmalermittlungsschaltung (Fig. 1), mit
einer Eingabeeinrichtung (1-5) zum Eingeben eines eine Vielzahl von Bildelementen (P) enthaltenden Bildes,
einer Adresseinrichtung (6) zum Erzeugen einer ein Muster von Bildelementen in einem ausgewählten Bereich (P₀-P₁₅) des eingegebenen Bildes darstellenden binärcodierten Nachschlagetabellen-Adresse,
einer mit der Adresseinrichtung (6) zusammenwirkenden Nachschlagetabelle (7), die auf jede Adresse anspricht, um ein einen Richtungsindex (H) für den ausgewählten Bereich darstellendes digitales Signal auszugeben, und
einer Ausgabeeinrichtung (8-19) zum Ausgeben eines Wertes des Richtungsindex (H) als einem Merkmal des eingegebenen Bildes, wobei die Schaltung (Fig. 1)
**dadurch gekennzeichnet ist, daß**
die Nachschlagetabelle (7) Daten entsprechend jeder erzeugten Adresse speichert, wobei die Daten das Ergebnis zuerst erfolgenden Glättens des eingegebenen Bildes durch Bestimmen von Werten für richtungsdefinierende Bildelemente (P₅, P₆, P₉, P₁₀) einschließlich des zu verarbeitenden spezifizierten Bildelements (P₅), beruhend auf dem Mittelwert der jedem der richtungsdefinierenden Bildelemente (P₅, P₆, P₉, P₁₀) und dem jeweiligen richtungsdefinierenden Bildelement benachbarten Bildelemente, und darauffolgenden Ermittelns eines auf den geglätteten richtungsdefinierenden Bildelementen (P₅, P₆, P₉, P₁₀) beruhenden Richtungsindex (H) darstellen.

2. Schaltung (6, 7) nach Anspruch 1, wobei der ausgewählte Bereich (P₀-P₁₅) des Bildes aus einer aus dem jeweiligen Bildelement (P₅) und drei benachbarten richtungsdefinierenden Bildelementen (P₆, P₉, P₁₀) bestehenden 2x2 Matrixanordnung (P₅, P₆, P₉, P₁₀) sowie anderen Bildelementen (P₀-P₄, P₇, P₈, P₁₁-P₁₅) besteht, welche der Matrixanordnung benachbart sind, um vollständige Glättungskorrekturinformationen für die Bildelemente (P₅, P₆, P₉, P₁₀) der Matrixanordnung bereitzustellen.

3. Schaltung nach Anspruch 2, wobei jede Adresse aus sechzehn Bit besteht und es sich bei dem ausgewählten Bereich (P₀-P₁₅) um eine 4x4 Matrixanordnung handelt.

4. Schaltung nach Anspruch 3, wobei die Adresseinrichtung (6) vier in Reihe geschaltete Schieberegister mit jeweils vier parallelen Ausgängen zum Ausgeben von je vier Bit der Sechzehn-Bit-Adresse umfaßt.

5. Schaltung nach einem der vorhergehenden Ansprüche, wobei die Nachschlagetabelle (7) für jede Adresse Richtungsindexdaten (H) und addierte Daten (D) enthält, wobei die addierten Daten (D) einen Zählwert von Übergängen zwischen dem jeweiligen Bildelement (P₅) und den richtungsdefinierenden Bildelementen (P₆, P₉, P₁₀) darstellen, der ansonsten auf der Grundlage des jeweiligen Bildelements (P₅) und der richtungsdefinierenden Bildelemente (P₆, P₉, P₁₀) der die anderen Bildelemente (P₀-P₄, P₇, P₈, P₁₁-P₁₅) verwendenden Glättungskorrektur folgend bestimmt werden könnte.

6. Merkmalermittlungsschaltung (6, 7) nach einem der vorhergehenden Ansprüche, wobei:
die Adresseinrichtung (6) eine Speichereinrichtung (6) umfaßt, die zum Speichern einer vorbestimmten Anzahl von Zeilen des aus einer vorbestimmten Anzahl von Bits bestehenden binären digitalen Bildes und dann zum Verschieben des Bildes vorgesehen ist;
die Nachschlagetabelle (7) entsprechende Ausgänge für die durch unterschiedliche Werte der Richtungsindizes (H) dargestellten entsprechenden Richtungen hat; und
an die entsprechenden Ausgänge Zähler (8, 9, 11, 13) angeschlossen sind.

7. Schaltung (6 bis 13) nach Anspruch 5 oder 6, wobei:
die Nachschlagetabelle (7) entsprechende zusätzliche Ausgänge zum Ausgeben der addierten Daten (D) aufweist; und
an die entsprechenden zusätzlichen Ausgänge zusätzliche Zähler (10, 12) angeschlossen sind.

8. Merkmalermittlungsgerät (1 bis 7), mit:
einer einen Bildabtaster (5) zum Erzeugen binärer digitaler Bilddaten umfassenden Eingabeeinrichtung (1 bis 5); und
einer Merkmalermittlungsschaltung (6, 7) nach einem der vorhergehenden Ansprüche.

9. Nachschlagetabelle (7),
**dadurch gekennzeichnet, daß**
sie derart entworfen ist, daß sie, wenn sie durch die Adresseinrichtung der Merkmalermittlungsschaltung (6, 7) nach Anspruch 1 adressiert wird, für jede ein unterschiedliches Muster von Bildelementen in einem ausgewählten Bereich (P₀ bis P₁₅) eines Bildes darstellende Adresse einen Richtungsindex (H) für ein spezifiziertes Bildelement (P₅) liefert, wobei der Richtungsindex (H) das Ergebnis zuerst erfolgenden Glättens des eingegebenen Bildes durch Bestimmen von Werten für richtungsdefinierende Bildelemente (P₅, P₆, P₉, P₁₀) einschließlich des zu verarbeitenden spezifizierten Bildelements (P₅), beruhend auf dem Mittelwert der jedem der richtungsdefinierenden Bildelemente (P₅, P₆, P₉, P₁₀) benachbarten Bildelemente und dem jeweiligen richtungsdefinierenden Bildelement, und darauffolgenden Ermittelns eines auf den geglätteten richtungsdefinierenden Bildelementen (P₅, P₆, P₉, P₁₀) beruhenden Richtungsindex (H) darstellt.

10. Nachschlagetabelle nach Anspruch 9, die für jede der Adressen sowohl den Richtungsindex (H) als auch addierte Daten (D) enthält, wobei die addierten Daten (D) einen Zählwert von Übergängen zwischen dem jeweiligen spezifizierten Bildelement (P₅) und den anderen richtungsdefinierenden Bildelementen (P₆, P₉, P₁₀) darstellen, der ansonsten auf der Grundlage des jeweiligen Bildelements (P₅) und der anderen richtungsdefinierenden Bildelemente (P₆, P₉, P₁₀) der Glättungskorrektur folgend bestimmt werden könnte.

11. Nachschlagetabelle (7) nach Anspruch 9 oder 10, und die aus einem Nur-Lese-Speicher besteht.

12. Verfahren zum Kodieren einer in einem der vorhergehenden Ansprüche 9 bis 11 beanspruchten Nachschlagetabelle (7), mit den Schritten:
Speichern von binären kodierten digitalen Bilddaten für einen ausgewählten Bereich (P₀-P₁₅) eines Bildes, wobei der ausgewählte Bereich (P₀-P₁₅) aus einem besonderen spezifizierten Bildelement (P₅), dem besonderen Bildelement (P₅) benachbarten richtungsdefinierenden Bildelementen (P₆, P₉, P₁₀), und den dem besonderen Bildelement (P₅) und den richtungsdefinierenden Bildelementen (P₆, P₉, P₁₀) benachbarten anderen Bildelementen (P₀-P₄,P₇, P₈, P₁₁-P₁₅) zur Verwendung beim Definieren einer entsprechenden Glättungskorrektur für das besondere Bildelement (P₅) und für jedes der richtungsdefinierenden Bildelemente (P₆, P₉, P₁₀) besteht,
Filtern der dem ausgewählten Bereich (P₀-P₁₅) entsprechenden Daten, um das besondere Bildelement (P₅) und die richtungsdefinierenden Bildelemente (P₆, P₉, P₁₀) einer Glättungskorrektur zu unterziehen;
Bestimmen des Richtungsindex (H) für das besondere Bildelement (P₅) des ausgewählten Bereichs (P₀-P₁₅) des Bildes;
Bestimmen einer das Muster der den ausgewählten Bereich (P₀-P₁₅) bildenden Bildelemente darstellenden Adresse;
Laden von Daten, die den Richtungsindex (H) darstellen, in eine Stelle auf die durch die Adresse zugegriffen wird; und
Wiederholen der vorhergehenden Schritte für jedes Muster, das für den ausgewählten Bildbereich ausmachende Bildelemente möglich ist.

13. Verfahren zum Kodieren einer Nachschlagetabelle nach Anspruch 12, mit:
auf das Filtern folgendem Bestimmen sowohl des Richtungsindex (H) als auch addierter Daten (D) für das besondere Bildelement (P₅), wobei die addierten Daten (D) einen Zählwert von Übergängen zwischen dem besonderen Bildelement und den richtungsdefinierenden Bildelementen (P₆, P₉, P₁₀) darstellen; und
Laden sowohl der Daten, die den Richtungsindex (H) darstellen, als auch der addierten Daten (D) in die Stelle, auf die durch die Adresse zugegriffen wird.

14. Verfahren zur Merkmalermittlung, bei dem digitale Bilddaten verwendet werden, um eine Adresse zu erzeugen, die ein Muster von Bildelementen in einem ausgewählten Bereich (P₀-P₁₅) eines eingegebenen Bildes darstellt, wobei das Verfahren das Adressieren einer Nachschlagetabelle (7), Verwenden der Adresse zum Ausgeben von einen Richtungsindex des ausgewählten Bereichs darstellenden Daten, und Ausgeben eines Werts des Richtungsindex als einem Merkmal des Bildes einschließt, wobei das Verfahren
**dadurch gekennzeichnet ist, daß**
die Nachschlagetabelle (7) Daten entsprechend jeder erzeugten Adresse speichert, wobei die Daten das Ergebnis zuerst erfolgenden Glättens des eingegebenen Bildes durch Bestimmen von Werten für richtungsdefinierende Bildelemente (P₅, P₆, P₉, P₁₀) einschließlich des zu verarbeitenden spezifizierten Bildelements (P₅), beruhend auf dem Mittelwert der jedem der richtungsdefinierenden Bildelemente (P₅, P₆, P₉, P₁₀) und dem jeweiligen richtungsdefinierenden Bildelement benachbarten Bildelemente, und darauffolgenden Ermittelns eines auf den geglätteten richtungsdefinierenden Bildelementen (P₅, P₆, P₉, P₁₀) beruhenden Richtungsindex (H) darstellen.

## Revendications

1. Circuit d'extraction de caractéristiques (figure 1) comprenant des moyens d'entrée (1-5) destinés à l'introduction d'une image comprenant plusieurs pixels (P), des moyens à adresse (6) destinés à générer une adresse de table à consulter en codage binaire représentant un motif de pixels dans une zone choisie (P₀-P₁₅) de l'image introduite, une table à consulter (7), pouvant coopérer avec lesdits moyens à adresse (6), qui, en réponse à chaque adresse, délivre en sortie un signal numérique représentant un indicateur de direction (H) pour la zone choisie, et des moyens de sortie (8-9) destinés à délivrer en sortie une valeur de comptage de l'indicateur (H) de direction en tant que caractéristique de l'image introduite, lequel circuit (figure 1) est caractérisé en ce que :
ladite table à consulter (7) stocke des données en fonction de chaque adresse générée, lesquelles données représentent le résultat d'un premier lissage de l'image d'entrée par la détermination de valeurs pour des pixels (P₅, P₆, P₉, P₁₀) de définition de direction comprenant le pixel spécifié (P₅) devant être traité, sur la base de la moyenne des pixels adjacents à chacun des pixels (P₅, P₆, P₉, P₁₀) de définition de direction et le pixel respectif de définition de direction, puis l'extraction d'un indicateur de direction (H) sur la base des pixels lissés (P₅, P₆, P₉, P₁₀) de définition de direction.

2. Circuit (6, 7) selon la revendication 1, dans lequel ladite zone choisie (P₀-P₁₅) de ladite image consiste en une matrice 2 x 2 (P₅, P₆, P₉, P₁₀), constituée du pixel respectif (P₅) et de trois pixels adjacents (P₆, P₉, P₁₀) de définition de direction, et d'autres pixels (P₀-P₄, P₇, P₈, P₁₁-P₁₅), voisins de la matrice pour produire une information de correction de lissage complet pour les pixels (P₅, P₆, P₉, P₁₀) de la matrice.

3. Circuit selon la revendication 2, dans lequel chaque adresse est de 16 bits et ladite zone choisie (P₀-P₁₅) est une matrice de 4 x 4.

4. Circuit selon la revendication 3, dans lequel lesdits moyens à adresse (6) comprennent quatre registres à décalage qui sont connectés en série et qui ont chacun quatre sorties parallèles délivrant chacune en sortie quatre bits de l'adresse à 16 bits.

5. Circuit selon l'une quelconque des revendications précédentes, dans lequel ladite table à consulter (7) comprend, à chaque adresse, une donnée (H) d'indicateur de direction et une donnée d'addition (D), laquelle donnée d'addition (D) représente une valeur de comptage de limites entre le pixel respectif (P₅) et les pixels (P₆, P₉, P₁₀) de définition de direction qui pourraient autrement être déterminées sur la base du pixel respectif (P₅) et des pixels (P₆, P₉, P₁₀) de définition de direction suivant une correction de lissage utilisant lesdits autres pixels (P₀-P₄,P₇,P₈,P₁₁-P₁₅).

6. Circuit (6, 7) d'extraction de caractéristiques selon l'une quelconque des revendications précédentes, dans lequel :
lesdits moyens à adresse (6) comprennent un moyen de stockage (6) qui est agencé pour stocker ladite image numérique binaire pour un nombre prédéterminé de lignes, ladite image étant constituée d'un nombre prédéterminé de bits, puis pour décaler ladite image ;
ladite table à consultation (7) comporte des sorties respectives pour les directions respectives représentées par différentes valeurs des indicateurs de direction (H) ; et
des compteurs (8, 9, 11, 13) sont connectés auxdites sorties respectives.

7. Circuit (6 à 13) selon les revendications 5 et 6, dans lequel :
ladite table à consultation (7) comporte des sorties additionnelles respectives pour délivrer en sortie lesdites données d'addition (D) ; et
des compteurs additionnels (10, 12) sont connectés auxdites sorties additionnelles respectives.

8. Appareil (1 à 7) d'extraction de caractéristiques comportant :
des moyens d'entrée (1 à 5) comprenant un analyseur (5) d'image destiné à produire des données d'images numériques binaires ; et
un circuit (6, 7) d'extraction de caractéristiques selon l'une quelconque des revendications précédentes.

9. Table (7) à consulter, caractérisée en ce qu'elle est agencée pour travailler de manière que, lorsqu'elle est adressée par les moyens à adresse du circuit (6, 7) d'extraction de caractéristiques de la revendication 1, elle renvoie, pour chaque adresse représentant un motif différent de pixels dans une zone choisie (P₀ à P₁₅) d'une image, un indicateur (H) de direction pour un pixel spécifié (P₅), lequel indicateur (H) de direction représente le résultat d'un premier lissage de l'image d'entrée par la détermination de valeurs pour des pixels (P₅, P₆, P₉, P₁₀) de définition de direction comprenant le pixel spécifié (P₅) devant être traité, sur la base de la moyenne des pixels adjacents à chacun des pixels (P₅, P₆, P₉, P₁₀) de définition de direction et le pixel respectif de définition de direction, puis l'extraction d'un indicateur de direction (H) sur la base des pixels lissés (P₅, P₆, P₉, P₁₀) de définition de direction.

10. Table à consulter (7) selon la revendication 9, qui contient à la fois ledit indicateur de direction (H) et une donnée d'addition (D) pour chaque adresse, laquelle donnée d'addition (D) représente une valeur de comptage de limites entre le pixel spécifié respectif (P₅) et les autres pixels (P₆, P₉, P₁₀) de définition de direction qui pourraient autrement être déterminées sur la base du pixel respectif (P₅) et des autres pixels (P₆, P₉, P₁₀) de définition de direction suivant une correction de lissage.

11. Table à consulter (7) selon l'une des revendications précédentes 9 ou 10 et consistant en une mémoire morte.

12. Procédé pour coder une table à consulter (7) selon l'une quelconque des revendications précédentes 9 à 11, lequel procédé comprend les étapes dans lesquels :
on stocke des données d'image numériques codées binaires pour une zone choisie (P₀ à P₁₅) d'une image, ladite zone choisie (P₀ à P₁₅) étant constituée d'un pixel spécifié particulier (P₅), de pixels (P₆, P₉, P₁₀) de définition de direction adjacents au pixel particulier (P₅), et des autres pixels (P₀-P₄,P₇,P₈,P₁₁-P₁₅) adjacents au pixel particulier (P₅) et aux pixels (P₆, P₉, P₁₀) de définition de direction pour une utilisation dans la définition d'une correction de lissage respective pour le pixel particulier (P₅) et pour chacun des pixels (P₆, P₉, P₁₀) de définition de direction ;
on filtre ladite donnée, correspondant à ladite zone choisie (P₀-P₁₅)F afin d'appliquer une correction de lissage au pixel particulier (P₅) et aux pixels (P₆, P₉, P₁₀) de définition de direction ;
on détermine l'indicateur de direction (H) pour ledit pixel particulier (P₅) de ladite zone choisie (P₀-P₁₅) de ladite image ;
on détermine une adresse représentant le motif des pixels (P₀-P₁₅) constituant ladite zone choisie (P₀- P₁₅) ;
on charge une donnée représentant l'indicateur de direction (H) en un emplacement auquel on accède par ladite adresse ; et
on répète les étapes précédentes pour chaque motif possible pour des pixels constituants ladite zone choisie.

13. Procédé pour coder une table à consulter selon la revendication 12, lequel procédé comprend :
la détermination à la fois dudit indicateur de direction (H) et d'une donnée d'addition (D) pour ledit pixel particulier (P₅), laquelle donnée d'addition (D) représente une valeur de comptage des limites entre le pixel particulier et les pixels (P₆, P₉, P₁₀) de définition de direction suivant ledit filtrage ; et
on charge à la fois ladite donnée représentant l'indicateur de direction (H) et ladite donnée d'addition (D) audit emplacement auquel on accède par ladite adresse.

14. Procédé d'extraction de caractéristiques dans lequel une donnée d'image numérique est utilisée pour générer une adresse représentant un motif de pixels dans une zone choisie (P₀-P₁₅) d'une image d'entrée, le procédé comprenant l'adressage d'une table à consulter (7), en utilisant ladite adresse, pour délivrer en sortie une donnée représentant un indicateur de direction de la zone choisie, et on délivre en sortie la valeur de comptage de l'indicateur de direction en tant que caractéristique de l'image, lequel procédé est caractérisé en ce que :
ladite table à consulter (7) stocke une donnée en fonction de chaque adresse générée, laquelle donnée représente le résultat d'un premier lissage de l'image d'entrée par la détermination de valeurs pour des pixels (P₅, P₆, P₉, P₁₀) de définition de direction comprenant le pixel spécifié (P₅) devant être traité, sur la base de la moyenne des pixels adjacents à chacun des pixels (P₅, P₆, P₉, P₁₀) de définition de direction et du pixel respectif de définition de direction, puis l'extraction d'un indicateur de direction (H) sur la base des pixels lissés (P₅, P₆, P₉, P₁₀) de définition de direction.
